# EUROPÄISCHE PATENTANMELDUNG

(11) **EP 0 705 642 A1**
(43) Veröffentlichungstag der Anmeldung: **10.04.1996**
(21) Anmeldenummer: 94810582.0
(22) Anmeldetag: 05.10.1994
(51) Int. Cl.: B01J 3/00, H01J 9/42

(54) **Vakuumkammersystem**

(71) Anmelder: GRETAG Aktiengesellschaft, CH-8105 Regensdorf (CH)
(72) Erfinder: Schulz-Hennig, Jörg, Dr., CH-8049 Zürich (CH)
(74) Vertreter: Kleewein, Walter, Dr.

(57) **Zusammenfassung**

Das Vakuumkammersystem umfasst eine Vielzahl miteinander druckdicht verbindbarer einzelner Elemente (1,2) mit nach den jeweiligen Bedürfnissen zu gestaltenden Abschlussplatten (16,17,18,19), welche an ihren Anschlussstellen gleiche Abmessungen aufweisen. An mindestens eines der Elemente ist eine Vakuumpumpe (5) anschliessbar. Die einzelnen Elemente (1,2) weisen eine quaderförmige, insbesondere würfelförmige, oder prismatische Gestalt aufweisen. Sie umfassen jeweils einen Rahmen, der aus miteinander verbundenen Stegen (10,20) besteht, die entlang der Kanten des Quaders bzw. Prismas verlaufen, sodass jedes einzelne Element (1,2) in mehrere verschiedene, nicht-parallele Richtungen mit einem weiteren Element (1,2) verbindbar ist.

## Beschreibung

Die Erfindung betrifft ein Vakuumkammersystem gemäss dem Oberbegriff des unabhängigen Patentanspruchs.

Bekannte Vakuumkammersysteme umfassen eine Vakuumpumpe zur Erzeugung des erforderlichen Vakuums. Ausserdem umfassen die bekannten Vakuumkammersysteme speziell auf die jeweilige Anwendung zugeschnittene Rohre, in denen die für die Anwendung erforderlichen Komponenten dann angeordnet werden. Zum Teil werden Vakuumkammersysteme auch aus einzelnen rohrförmigen Elementen zusammengesetzt, wobei diese Elemente an ihren Anschlussstellen gleiche Abmessungen aufweisen und druckdicht miteinander verbindbar sind, indem entsprechende Dichtungen an den Anschlussstellen vorgesehen sind.

Die speziell auf die jeweilige Anordnung zugeschnittenen Rohre haben den Nachteil, dass sie nur für die jeweilige Anordnung einsetzbar sind. Das Vakuumkammersystem mit den rohrförmigen Elementen ist in dieser Beziehung flexibler, weist allerdings auch noch den Nachteil auf, dass der Innenraum der rohrförmigen Elemente, in welchem die für die Anwendung erforderlichen Komponenten angeordnet werden müssen, nur von den beiden Stirnseiten her zugänglich ist und mit solchen rohrförmigen Elementen auch nur lineare Systeme gebaut werden können. Um nicht nur lineare Anordnungen bauen zu können werden zum Teil auch T-förmige oder andersartig verzweigte Rohre hergestellt, die allerdings wesentlich aufwendiger in der Herstellung sind und das Problem dei besseren Zugänglichkeit des Innenraums auch nicht zufriedenstellend lösen.

Der vorliegenden Erfindung liegt daher die Aufgabe zugrunde, ein Vakuumkammersystem vorzuschlagen, bei welchem die beschriebenen Nachteile behoben sind und welches dennoch einfach in der Herstellung und sehr flexibel in der Handhabung ist, und welches darüberhinaus eine gute Zugänglichkeit in den Innenraum ermöglicht.

Erfindungsgemäss wird daher vorgeschlagen die einzelnen Elemente quaderförmig, insbesondere würfelförmig, oder mit prismatische Gestalt auszubilden. Die einzelnen Elemente weisen jeweils einen Rahmen auf, welcher aus miteinander verbundenen Stegen besteht, die entlang der Kanten des Quaders bzw. Prismas verlaufen, sodass jedes einzelne Elemente in mehrere verschiedene, nicht-parallele Richtungen mit einem weiteren Element verbindbar ist. Dadurch ist der Innenraum sehr gut zugänglich, die Herstellung der Elemente ist ausserdem sehr einfach. Ausserdem ist ein Vakuumkammersystem, das solche einzelnen Elemente umfasst, sehr flexibel in der Handhabung, weil jedes Element in mehrere verschiedene, nicht-parallele Richtungen mit einem weiteren Element verbindbar ist. Dadurch können die einzelnen Elemente für sehr viele unterschiedliche Anwendungen eingesetzt werden - man hat auf diese Weise eine Art Baukasten zur Verfügung, aus dem sich sehr viele verschiedene Anordnungen mühelos zusammenbauen lassen, sodass ein solches System sehr universell einsetzbar ist.

In einer speziellen Weiterbildung weisen die Stege des Rahmens der quaderförmigen oder prismatischen Elemente, die ein Rechteck bilden, alle die gleiche Kantenlänge auf, die Rechtecke sind also quadratisch, sodass im Prinzip jede quadratische Anschlussfläche mit jeder quadratischen Fläche eines anderen Elements beliebig verbunden werden kann. Dies erhöht die Flexibilität noch weiter.

Im folgenden wird die Erfindung anhand der Zeichung näher erläutert. Es zeigen in schematischer Darstellung:
- Fig. 1: ein Ausführungsbeispiel eines Rahmens eines würfelförmigen Elements des erfindungsgemässen Vakuumkammersystems,
- Fig. 2: ein Ausführungsbeispiel eines Rahmens eines prismatischen Elements,
- Fig. 3: eine Anordnung aus zwei würfelförmigen und einem prismatischen Element,
- Fig. 4: eine Anordnung aus zwei würfelförmigen Elementen mit Abschlussplatten, Dichtungen und Verbindungsbügeln
und
- Fig. 5: ein Vakuumkammersystem im Zusammenbau.

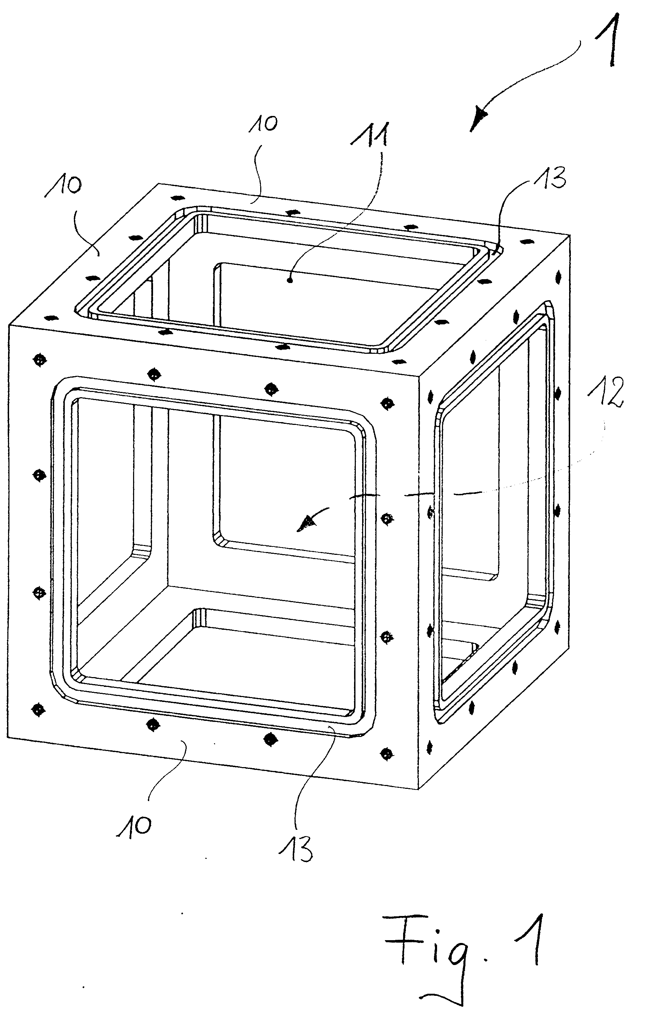

In dem in Fig. 1 gezeigten Ausführungsbeispiel eines würfelförmigen Elements 1 des erfindungsgemässen Vakuumkammersystems erkennt man, dass das Element 1 einen Rahmen aus mehreren miteinander verbundenen Stegen 10 umfasst. Die Stege 10 umschliessen quadratische Öffnungen 11, sodass an jeder der sechs "Flächen" des würfelförmigen Elements 1 eine solche Öffnung 11 vorhanden ist und somit der Innenraum 12 des würfelförmigen Elements 1 aus sechs verschiedenen Richtungen zugänglich ist. In diese sechs Richtungen sind auch weitere Elemente mit dem Element 1 verbindbar, was noch detaillierter erläutert werden wird. Um die Öffnungen 11 herum sind jeweils umlaufende Nuten 13 vorgesehen, in welche entsprechende Dichtungen (in Fig. 1 nicht dargestellt) eingepasst werden können.

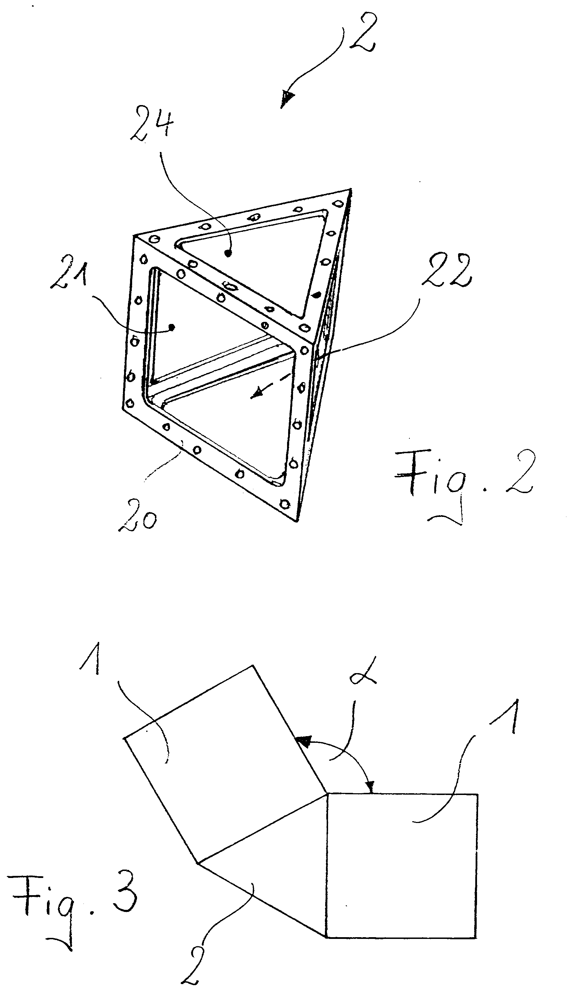

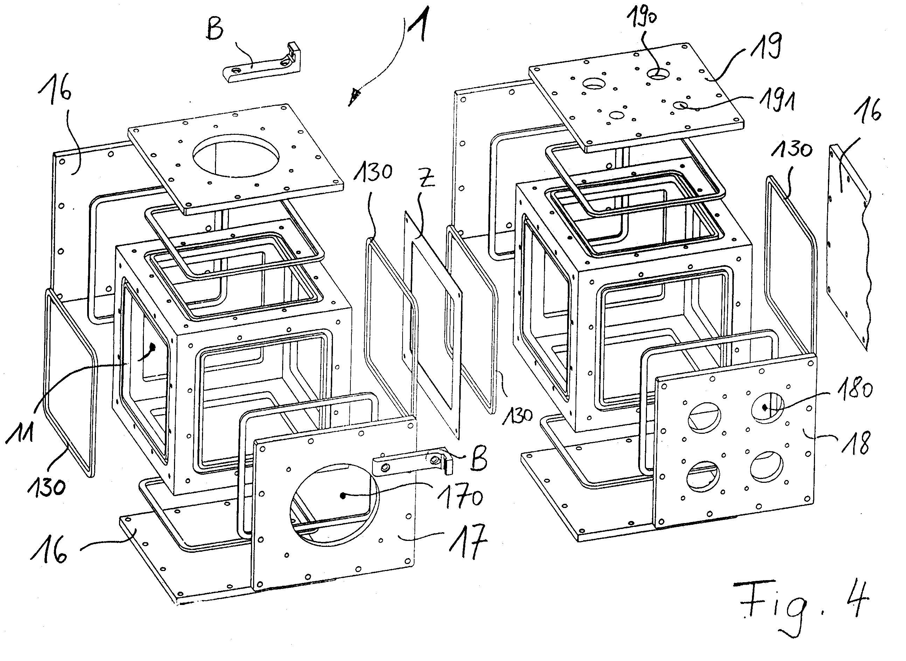

In Fig. 2 ist ein Ausführungsbeispiel eines prismatischen Elements 2 zu erkennen. Auch dieses Element umfasst mehrere miteinander verbundene Stege 20. Die Stege 20 umschliessen drei quadratische Öffnungen 21 sowie zwei dreieckige Öffnungen 24. Der Innenraum 22 ist somit aus fünf verschiedenen Richtungen zugänglich. Mit den drei quadratischen "Flächen" sind weitere Elemente mit quadratischer "Fläche" verbindbar (sowohl quadratische oder prismatische). Auf die Darstellung der entsprechenden Nuten für die Dichtungen ist in Fig. 2 verzichtet worden. Mit den dreieckigen "Flächen" sind weitere Elemente mit ebenfalls dreieckiger "Fläche" verbindbar (prismatische), wobei natürlich mit den quadratischen Flächen dieser prismatischen Elemente wieder sowohl quadratische als auch prismatische Elemente verbindbar sind. Ein Beispiel für eine solche zwei quadratischen Elemente 1 und ein prismatisches Element 2 umfassende Anordnung ist in Fig. 3 schematisch dargestellt, wobei hier ein Winkel von α = 120° eingeschlossen wird. Dieser Winkel ist aber nur beispielhaft zu betrachten, es können auch andere Winkel realisiert werden.

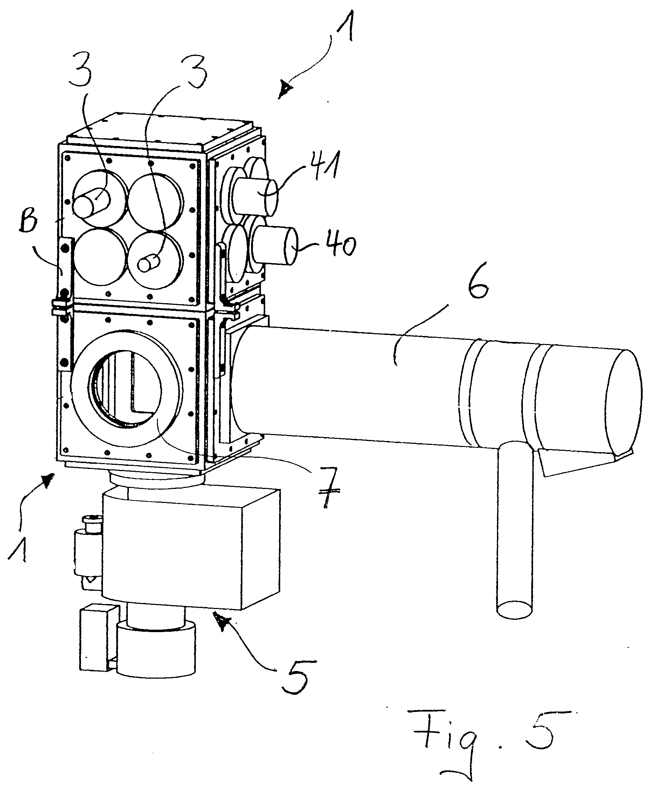

In Fig. 4 ist in Explosionsdarstellung eine Anordnung aus zwei würfelförmigen Elementen 1 gezeigt, wobei hier nicht nur die Rahmen der würfelförmigen Elemente 1 dargestellt sind, sondern auch verschiedene Typen von auf den Rahmen montierbaren Abschlussplatten 16,17,18 und 19, sowie Dichtungen 130, ein Zwischenstück Z, sowie Bügel B, welche im zusammengebauten Zustand die beiden würfelförmigen Elemente 1 druckdicht fixieren.

Bei der Abschlussplatte 16 handelt es sich um eine reine Abschlussplatte ohne irgendwelche Öffnungen - solche Abschlussplatten dienen lediglich (zusammen mit der entprechenden Dichtung) zum druckdichten Verschliessen der jeweiligen Öffnung 11 der würfelförmigen Elemente 1. Die Abschlussplatte 17 hingegen weist eine zentrale Öffnung 170 auf - an eine solche Platte kann z.B. ein Elektronenstrahlrohr (wird noch anhand von Fig. 5 erläutert) oder auch andere Geräte angeflanscht werden. Die Abschlussplatte 18 weist vier symmetrisch verteilte Öffnungen 180 auf, mittels derer beispielsweise verschiedene Vakuummessröhren druckdicht angeschlossen werden können. Die Abschlussplatte 19 weist ebenfalls vier symmetrisch verteilte Öffnungen 190 bzw. 191 auf, die aber paarweise einen unterschiedlichen Durchmesser aufweisen. Solche Abschlussplatten können beispielsweise verwendet werden, um den Anschluss von Vakuumdurchführungen von verschiedenen Mess- und/oder Steuerleitungen zu ermöglichen. Ferner ist noch ein abgedichtetes Zwischenstück Z und die Bügel B vorhanden, welche bei einem zusammengebauten System die einzelnen Elemente druckdicht fixieren. In Fig. 4 sind nur zwei Bügel B dargestellt, zur Verbindung von zwei Elementen werden aber mindestens Paare von Bügeln an gegenüberliegenden Ecken auf den Abschlussplatten befestigt, und beispielsweise durch eine Schraubverbindung werden die Elemente dann fixiert.

Ein zusammengebautes Vakuumkammersystem mit einer speziellen Anordnung zur Lebensdauermessung verschiedener Typen von Heizkathoden, wie sie besipielsweise in einem Videoprojektor, der nach dem Ölfilm-Lichtventilverfahren arbeitet, eingesetzt werden, ist in Fig. 5 dargestellt. In dieser Figur erkennt man auch, wie die Elemente 1 mittels der Bügel B fixiert sind. Im Prinzip entsprich das in Fig. 5 dargestellte Vakuumkammersystem - sofern es die einzelnen Elemente 1 und die Abschlussplatten betrifft, der Explosionsdarstellung in Fig. 4. Darüberhinaus sind aber die an die Abschlussplatten angeschlossenen Geräte etc. in Fig. 5 dargestellt. Namentlich handelt es sich dabei um Durchführungen 3, um Vakuummessröhren in Form einer Vorvakuummessröhre 40 und einer Hochvakuummessröhre 41, um eine Vakuumpumpe in Form einer Turbomolekularpumpe 5, sowie um eine Elektronenstrahlröhre 6. Die einzelnen Geräte etc. sind an die entsprechenden Abschlussplatten druckdicht angeflanscht. Im Innenraum 12 des unteren würfelförmigen Elements ist eine Elektronenstrahlfangeinrichtung (nicht dargestellt) untergebracht, die optisch überwachbar ist. Zu diesem Zweck ist ein entsprechender Fensterflansch 7 vorgesehen. Der Innenraum des Vakummkammersystems wird mit Hilfe der Turbomolekularpumpe 5 evakuiert. Dieses Vakuum wird bei seiner Erzeugung zunächst mittels der Vorvakummessröhre 40 und später dann mittels der Hochvakuummessröhre 41 überwacht. Anschliessend kann die Lebensdauermessung beginnen. Dies ist ein Beispiel für einen Einsatz des erfindungsgemässen Vakuumkammersystems.

Das beschriebene Vakuumkammersystem zeichnet sich, wie der Fachmann klar erkennt, durch die gute Zugänglichkeit in den Innenraum der einzelnen Elemente, durch seine Flexibilität in der Anordnung und in der Handhabung, sowie durch die einfache Herstellung der einzelnen Elemente ganz besonders aus und macht es universell einsetzbar und ausserdem beliebig wiederverwendbar.

## Patentansprüche

1. Vakuumkammersystem mit einer Vielzahl miteinander druckdicht verbindbarer einzelner Elemente (1,2), welche an ihren Anschlussstellen gleiche Abmessungen aufweisen, wobei an mindestens eines der Elemente eine Vakuumpumpe (5) anschliessbar ist, dadurch gekennzeichnet, dass die einzelnen Elemente (1,2) eine quaderförmige, insbesondere würfelförmige, oder prismatische Gestalt aufweisen, wobei die einzelnen Elemente jeweils einen Rahmen aufweisen, der aus miteinander verbundenen Stegen (10,20) besteht, die entlang der Kanten des Quaders bzw. Prismas verlaufen, sodass jedes einzelne Element (1,2) in mehrere verschiedene, nicht-parallele Richtungen mit einem weiteren Element (1,2) verbindbar ist.

2. Vakuumkammersystem nach Anspruch 1, dadurch gekennzeichnet, dass die Stege (10,20) des Rahmen der quaderförmigen oder prismatischen Elemente (1,2), die ein Rechteck bilden, alle die gleiche Kantenlänge aufweisen.
